**Europäisches Patentamt**

**European Patent Office**

**Office européen des brevets**

(11) Veröffentlichungsnummer: **0 596 335 A1**

# EUROPÄISCHE PATENTANMELDUNG

(21) Anmeldenummer: **93117021.1**

(22) Anmeldetag: **21.10.93**

(51) Int. Cl.5: **B62L 3/02**, B62L 1/14

(30) Priorität: **03.11.92 DE 4237110**

(43) Veröffentlichungstag der Anmeldung:
**11.05.94 Patentblatt 94/19**

(84) Benannte Vertragsstaaten:
**BE CH DE ES FR IT LI NL PT**

(71) Anmelder: **WILLI WÄLTE ELEKTRONIK INGENIEURBUREAU**
**Schawalderhof 84**

**CH-9430 St. Margrethen(CH)**

(72) Erfinder: **Wälte, Willi**
**Schawalderhof 84**
**CH-9430 St. Margrethen(CH)**

(74) Vertreter: **Riebling, Peter, Dr.-Ing.**
**Patentanwalt,**
**Rennerle 10**
**D-88131 Lindau/B. (DE)**

(54) **Hydraulische Bremse für Fahrräder.**

(57) Eine hydraulische Bremse für Fahrräder besteht im wesentlichen aus einem am Lenkerrohr (33) des Fahrrades befestigten Bremshebel (27), der auf einen in einem Geberzylinder verschiebbar angeordneten Geberkolben (24) wirkt, wobei die durch den Geberkolben und -zylinder definierte Kammer mit Hydraulikflüssigkeit gefüllt ist, die über einen Hydraulikschlauch (22) in die Kammer (15) eines Arbeitszylinders geleitet wird, in dem ein Arbeitskolben (10) verschiebbar angeordnet ist, der auf die Bremsbacken (2) des Fahrrades einwirkt. Es soll bei niedrigen Herstellungskosten eine leichte Austauschbarkeit und eine bessere Betriebssicherheit der Bremse gegeben sein. Hierfür ist ein einziger Arbeitszylinder oberhalb der Gabel des Fahrrades befestigt und der Arbeitskolben ist mit einem Betätigungskopf (20) verbunden, über den das Zugseil geführt ist, welches auf die vorhandenen, herkömmlichen Bremsbacken wirkt.

FIG 1

EP 0 596 335 A1

Gegenstand der Erfindung ist eine hydraulische Bremse für Fahrräder nach dem Oberbegriff des Patentanspruchs 1.

Eine derartige hydraulische Bremse ist als Vorderrad- oder Hinterradbremse für Fahrräder bekannt, wobei am Lenkerrohr ein Bremshebel befestigt ist, der auf einen in einem Geberzylinder verschiebbar angeordneten Geberkolben wirkt. Die Zylinderkammer, die durch den Geberzylinder und den zugeordneten Geberkolben definiert ist, ist mit einer Hydraulikflüssigkeit gefüllt, und der dadurch erzeugte Hydraulikdruck wirkt über einen Hydraulikschlauch auf mindestens einen Arbeitszylinder, dessen ein oder mehrere Arbeitskolben auf die Bremsbacken des Fahrrades wirken.

Es ist hierbei bekannt, zwei Arbeitszylinder mit jeweils einem Arbeitskolben vorzusehen, wobei der Arbeitskolben unmittelbar auf den Bremsklotz wirkt. Bei dieser bekannten Ausführungsform ist also der Arbeitszylinder mit dem zugeordneten, darin verschiebbar angeordneten Arbeitskolben unmittelbar als Bremssattel ausgebildet und der Arbeitskolben wirkt unmittelbar auf die Bremsbacken.

Mit dieser Ausführungsform besteht der Nachteil, daß ein relativ hoher Aufwand betrieben wird, weil ja jedem Bremsklotz ein eigener Arbeitszylinder mit einem zugeordneten Arbeitskolben zugeordnet ist, was die Herstellungskosten sehr stark erhöht. Weiterer Nachteil ist die relativ große Verschleißanfälligkeit, weil die gesamte Anordnung im schmutzbehafteten Bereich des Fahrzeuges angeordnet ist. Ein weiterer Nachteil ist, daß aufgrund des bestehenden, relativ hohen Bremsdruckes die Vorderradgabel besonders verstärkt werden muß, weil die gegeneinander wirkenden Arbeitskolben die Gabel und die zur Lagerung der Cantilever-Bremsbacken erforderlichen Befestigungsschrauben stark auf Biegung beanspruchen.

Weiterer Nachteil der bekannten Anordnung ist, daß vorhandene Bremseinrichtungen nur schwer mit der bekannten Hydraulikbremse nachgerüstet werden können, weil die Abmessungen der verschiedenen Gabeln und Felgen möglicherweise einen Austausch der Arbeitskolben mit den daran ansetzenden Bremsbacken erfordert.

Der Erfindung liegt deshalb die Aufgabe zugrunde, eine hydraulische Bremse eines Fahrrades oder eines anderen Zweiradfahrzeuges so weiterzubilden, daß bei niedrigeren Herstellungskosten eine leichte Austauschbarkeit und eine bessere Betriebsicherheit der Bremse gegeben ist.

Zur Lösung der gestellten Aufgabe ist die Erfindung durch die Merkmale des Anspruchs 1 gekennzeichnet.

Wesentliches Merkmal der Erfindung ist, daß nun ein einziger Arbeitszylinder an der Vorder- oder Hinterradgabel angeordnet ist, und daß der Arbeitskolben dieses Arbeitszylinders mit einem Betätigungskopf verbunden ist, der mit Zugseilen verbunden ist, die unmittelbar an den Cantilever-Bremsbacken ansetzen.

Mit der gegebenen technischen Lehre wird also der Vorteil erreicht, daß die Cantilever-Bremsbacken, die normalerweise bei Fahrrädern vorhanden sind und die dazugehörenden Zugseile im wesentlichen beibehalten werden können und daß nur zur Umrüstung einer herkömmlichen, mechanischen Cantilever-Bremse der Arbeitszylinder an der Vorder- oder Hinterradgabel angeordnet werden muß und dann in ansich bekannter Weise über einen Hydraulikschlauch mit dem Geberzylinder im Bremshebel zusammenwirkt.

Es ergibt sich also der wesentliche Vorteil einer einfachen Austauschbarkeit der gesamten Anordnung, weil der Arbeitszylinder in der am Fahrrad vorhandenen Befestigungsbohrung angeschraubt werden kann, wobei - wie oben beschrieben - die Cantilever-Bremsbacken mit den dazugehörenden Zugseilen unverändert bleiben.

Damit wird der ideale Wirkungsgrad der Cantilever-Bremsbacken mit einer wartungsfreien und praktisch reibungsfreien, hydraulischen Betätigung kombiniert, was mehrere Vorteile mit sich bringt:

Der Bremsdruck, der auf die Cantilever-Bremsbacken wirkt, wird über die Dreiecksführung des Zugseiles gleichmässig über dem Betätigungskopf des Arbeitszylinders übertragen, wodurch es zu einer gleichmässigen Belastung der Cantilever-Bremsbacken führt. Damit besteht nicht mehr die Gefahr, daß der Rahmen überdimensioniert werden muß, wenn eine hydraulische Bremse angebaut wird, denn die Cantilever-Bremsbacken bleiben unverändert an dem Fahrzeug erhalten und damit auch die Dimensionierungen der Vorder- oder Hinterradgabel.

Außerdem besteht der weitere Vorteil, daß nun durch die Verwendung eines einzigen Arbeitszylinders mit einem zugeordneten Betätigungskopf ein wesentlich geringerer Aufwand bei der Herstellung und bei der Montage besteht, weil dieser unmittelbar an der vorhandenen Befestigungsbohrung für die mechanische Betätigungseinrichtung der Cantilever-Bremsbacken befestigt werden kann.

Weiterer Vorteil ist, daß der erfindungsgemässe Arbeitszylinder mit dem Betätigungskopf von dem verschmutzungsanfälligen Bereich im Bereich des Rades herausgebracht wird und mehr in Richtung auf den Lenker nach oben versetzt am Rahmenrohr befestigt wird.

Damit besteht nicht mehr die Verschmutzungsanfälligkeit, wie bei den vorher erwähnten, bekannten Arbeitszylindern, die unmittelbar in den Bremsbacken selbst angeordnet waren.

Die vorher beschriebene Befestigungsbohrung am Rahmen, die zur Halterung des einzigen Arbeitszylinders dient, dient gleichzeitig - in ansich bekannter Weise - zur Halterung des Schutzbleches und des Vorderlichtes.

Bei der Verwendung eines einzigen Arbeitszylinders im Mittenbereich der Vorderrad- oder Hinterradgabel, welcher gleichmässig auf beide Zugseile wirkt, besteht im übrigen der Vorteil, daß eine ideale Verteilung der Bremskraft gleichmässig auf beide Bremsbacken erfolgt und daß demzufolge auch die Bremsseile sehr einfach durch Verstellung des Betätigungskopfes der Bremse eingestellt werden kann; wenn beispielsweise der Betätigungskopf als Stellrad ausgebildet ist, der mit einem Gewindezapfen in eine zugeordnete Gewindebohrung im Arbeitskolben eingreift, so daß der Betätigungsweg dieses Betätigungskopfes über die Verdrehung des Stellrades eingestellt werden kann. Damit kann der Bremsweg auf einfache Weise verstellt werden.

Hierbei gibt es zwei verschiedene Ausführungsformen, nämlich in der ersten Ausführungsform ist das Zugseil von der linken Bremsbacke über den Betätigungskopf zur rechten Bremsbacke geführt, wobei der Betätigungskopf die Umlenkung des Zugseiles übernimmt, während in einer zweiten Ausführungsform die Zugseile jeweils mit einem Ende an dem verschwenkbaren Teil der jeweiligen Bremsbacke ansetzen und mit dem anderen Ende fest aber drehbar mit dem Betätigungskopf verbunden sind. Die Einstellung der Zugseile erfolgt dann mit einer Stellschraube, ohne daß die Zugseile von dem Befestigungskopf abgenommen werden müssten.

In einer anderen Ausgestaltung der Erfindung ist noch eine zusätzliche Druckregulierungsvorrichtung vorgesehen, mit der es möglich ist, den Druck in der Zylinderkammer des Arbeitszylinders einzustellen. Hierzu wird ein Druckregulierungskolben verwendet, der in einer weiteren Zylinderkammer verschiebbar angeordnet ist und unter der Last einer einstellbaren Druckfeder die Hydraulikflüssigkeit in der Kammer des Arbeitszylinders vorspannt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert im Schnitt eine Hydraulikbremse in einer ersten Ausführungsform,

Figur 2: ein vergrößerter Schnitt durch einen Arbeitszylinder in einer zweiten Ausführungsform.

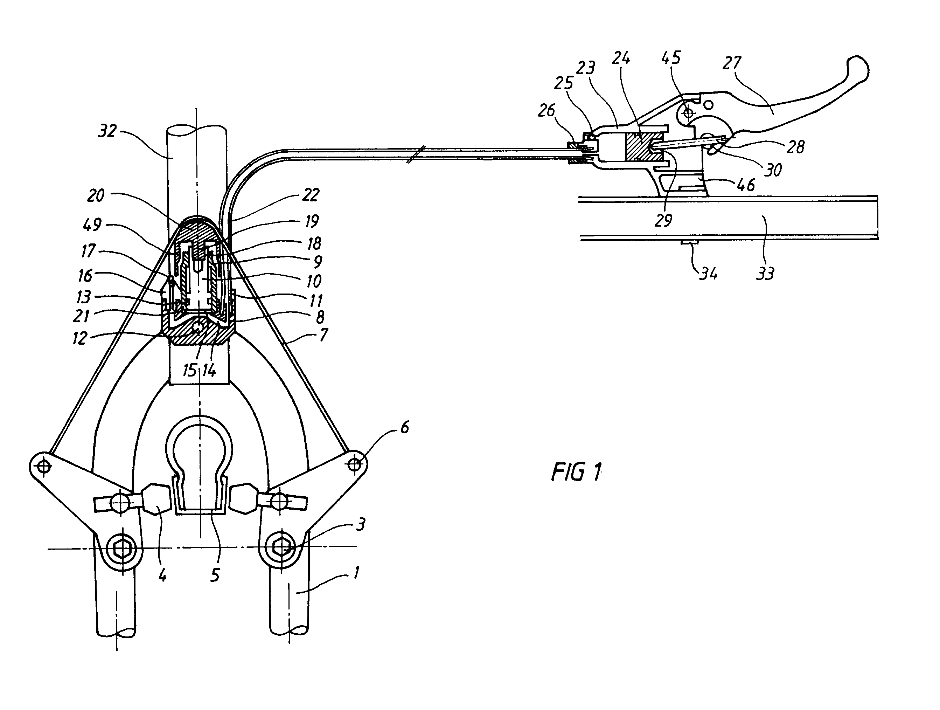

In Figur 1 ist eine Gabel 1 eines Fahrrades mit einem Rahmenrohr 32 verbunden. Im Bereich des Übergangs zwischen diesen beiden Teilen befindet sich eine Befestigungsbohrung 12, durch welche eine nicht näher dargestellte Schraube greift, die den Arbeitszylinder 9 der Hydraulikbremse befestigt.

An der Gabel 1 sind in ansich bekannter Weise Cantilever-Bremsbacken 2 schwenkbar in den Drehlagern 3 gehalten, und sind mit Bremsklötzen 4 versehen. Die Bremsklötze 4 wirken in ansich bekannter Weise auf die Felge 5 eines Vorder- oder Hinterreifens.

An den freien schwenkbaren Enden der Bremsbacken 2 sind Bolzen 6 befestigt, in denen jeweils ein Ende eines durchgehenden Zugseiles 7 aufgenommen ist. Dieses Zugseil 7 ist über einen Betätigungskopf der Hydraulikbremse geführt, der im gezeigten Ausführungsbeispiel nach Figur 1 als Stellrad 20 ausgebildet ist. Das Stellrad 20 weist einen unteren Gewindezapfen 19 auf, der in eine zugeordnete Kolbenbohrung 18 eines Arbeitskolbens 10 eingeschraubt ist. Der Arbeitskolben 10 ist mit Hilfe eines O-Ringes 13 in der Kammer 15 des Arbeitszylinders 9 abgedichtet und dort verschiebbar unter Einwirkung der Hydraulikflüssigkeit.

Der Arbeitszylinder 9 ist hierbei in einen Träger 8 eingeschraubt, wobei die gegenseitige Verbindung im Bereich einer Gewindebohrung 21 erfolgt. Die Hydraulikflüssigkeit wird über einen Hydraulikschlauch 22 herangeführt, der über eine Schlauchklemmschraube 11 an dem Träger 8 befestigt ist. Die Schlauchklemmschraube 11 dichtet den Hydraulikschlauch 22 mit einem Konus gegenüber dem Träger 8 ab.

Der Hydraulikschlauch 22 mündet in einen Kanal 14, der seinerseits in die Kammer 15 einmündet.

An der gegenüberliegenden Seite führt der Kanal 14 zu einem Einfüllnippel 16, der an seiner Oberseite mit einer federbelasteten Schließkugel 17 versehen ist.

Der Hydraulikdruck wird erzeugt mit einem Geberzylinder 23, in dem ein Geberkolben 24 verschiebbar gelagert ist und ebenfalls mit einem O-Ring abgedichtet ist. Der Geberkolben 23 weist eine Bohrung 29 auf, in welche verstellbar das Ende einer Geberkolbenstange 28 eingreift. Diese Geberkolbenstange 28 ist als Gewindeschraube ausgebildet und ist verstellbar in einer zugeordneten Gewindemutter 30 gehalten, welche drehbar im schwenkbaren Teil eines Bremshebels 27 angeordnet ist. Der Bremshebel 27 ist in einem Schwenklager 45 in einem Gebergehäuse 46 schwenkbar gelagert und die Geberkolbenstange 28 betätigt somit den Geberkolben 24 in dem Geberzylinder 23. Der Hydraulikschlauch 22 ist wiederum mit einer Schlauchklemmschraube 26 abdichtend an dem Gebergehäuse 46 befestigt. Das Gebergehäuse 46 ist mit einer Rohrbride 34 an dem Lenkerrohr 33 des Fahrrades befestigt.

Bei Betätigung des Bremshebels 27 wird somit der Geberkolben 24 in Figur 1 nach links bewegt und der Druck in der Kammer des Geberzylinders 23 steigt an und wird über den Hydraulikschlauch 22 in die Kammer 15 des Arbeitszylinders 9 verzögerungsfrei weitergeleitet. Damit wird der Arbeitskolben 10 nach oben verschoben und damit auch der Betätigungskopf, der als Stellrad 20 ausgebildet ist. Es wird somit das Zugseil 7 gleichmässig betätigt. Wichtig in diesem Zusammenhang ist, daß die Cantilever-Bremsbacken 2 mit den dazugehörenden Teilen (Bremsklotz 4, Drehlager 3) beibehalten werden können und nicht durch andere Teile ersetzt werden müssen.

Zur Voreinstellung der Bremskraft kann somit das Stellrad 20 bei abgenommenem Zugseil 7 betätigt werden, wobei die Zugseile danach wieder auf das Stellrad 20 aufgelegt werden.

Zum Befüllen der Bremse wird bei eingeschraubtem Einfüllnippel 16 über die Schließkugel 17 Hydraulikflüssigkeit in das drucklose System eingespritzt, wobei die Entlüftungsschraube 25 geöffnet ist. Das Befüllen der Anlage erfolgt solange, bis Hydraulikflüssigkeit aus der Entlüftungsschraube 25 austritt. Danach wird die Entlüftungsschraube 25 geschlossen.

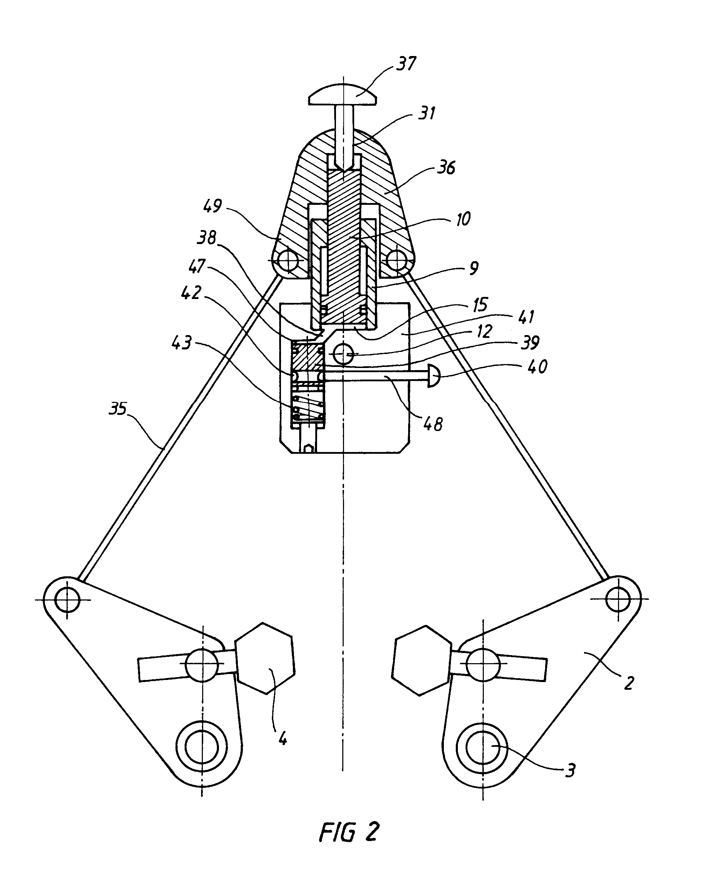

In Figur 2 sind die gleichen Teile mit den gleichen Bezugszeichen versehen.

Der Arbeitszylinder 9 weist einen gleichen Arbeitskolben 10 auf, nur daß dieser Arbeitskolben 10 mit einem anderen Betätigungskopf versehen ist. Der Betätigungskopf ist hier als Zugbügel 36 ausgebildet, an den jeweils ein Zugseil 35 angelenkt ist.

Die Zugseile 35 weisen damit eine feste, stets gleichbleibende, Länge auf und werden damit symmetrisch betätigt und wieder gelöst.

Zur Einstellung der Bremskraft ist eine Stellschraube 37 vorgesehen, die in eine Gewindebohrung 31 des Zugbügels 36 eingeschraubt ist und die sich mit ihrem bolzenseitigen Ende auf der Oberseite des Arbeitskolbens 10 abstützt.

Nachfolgend wird ein Druckregulierungssystem beschrieben, mit dem es möglich ist, den Bremsdruck voreinzustellen.

Hierzu ist in flüssigkeitsleitender Verbindung zu dem vorher beschriebenen Kanal 14 ein weiterer Druckregulierungskanal 38 vorhanden, der in eine Kammer 47 im Bereich eines Trägers 41 mündet. In der Kammer 47 ist ein Druckregulierkolben 39 verschiebbar und abgedichtet angeordnet, der unter der Last einer Druckfeder 43 steht. Die Druckfeder stützt sich mit ihrem einen Ende am Druckregulierkolben 39 und mit ihrem anderen Ende an einer Regulierschraube 44 ab. Durch Herein- oder Herausschrauben der Regulierschraube 44 wird somit die Federkraft der Druckfeder 43 eingestellt und somit auch der Druck des Druckregulierkolbens 39 auf die Hydraulikflüssigkeit in der Kammer 15.

Damit erfolgt eine Voreinstellung des Hydraulikdruckes im gesamten System. Um die Einstellung zu blockieren, ist im Träger 41 ein Sperrschieber 40 in einer Bohrung 48 verschiebbar angeordnet, welcher Sperrschieber 40 mit seinem bolzenseitigen Ende in Eingriff mit einer am Umfang des Druckregulierkolbens 39 angeordneten Ringnut 42 bringbar ist.

Damit kann die Verschiebung des Druckregulierkolbens 39 arretiert werden.

Bei Betätigung der Bremse erfolgt somit eine Erhöhung des Druckes auch in der Kammer 47, und der Druckregulierkolben weicht entgegen der Kraft der Druckfeder 43 nach unten aus, wodurch das Einsetzen der Bremswirkung nicht so abrupt erfolgt.

Um diese Druckregulierung auszuschalten, ist der Sperrschieber 40 vorgesehen, der z.B. bei nassem Wetter betätigt wird, wodurch der Druckregulierkolben 39 arretiert wird und der Bremsdruck unmittelbar auf die Kammer 15 und damit auf den Arbeitskolben 10 wirkt.

Ein weiterer Vorteil der Erfindung mit der Verwendung eines einzigen Arbeitszylinders mit einem zugeordneten einzigen Arbeitskolben besteht im übrigen auch darin, daß mit Verwendung der herkömmlichen Cantilever-Bremsen auch der Radwechsel besonders einfach ist, was vorher bei der bekannten Hydraulikbremse, bei welcher die Arbeitskolben direkt im Bremssattel eingebaut waren, nicht möglich waren. Dort mussten die Bremssättel mit ausgebaut werden, was bei der vorliegenden Erfindung nicht notwendig ist. In beiden Ausführungsformen der Figur 1 und 2 weist der Betätigungskopf 20,36 im übrigen seitliche Flanschbereiche 49 auf, die den jeweiligen Arbeitszylinder 9 von oben her übergreifen und so vor Verschmutzungen schützen.

4

| Zeichnungs-Legende | | | |
|---|---|---|---|
| 1 | Gabel | 26 | Schlauchklemmschraube |
| 2 | Bremsbacken | 27 | Bremshebel |
| 3 | Drehlage | 28 | Geberkolbenstange |
| 4 | Bremsklotz | 29 | Bohrung |
| 5 | Felge | 30 | Gewindemutter |
| 6 | Bolzen | 31 | Gewindebohrung |
| 7 | Zugseil | 32 | Rahmenrohr |
| 8 | Träger | 33 | Lenkerrohr |
| 9 | Arbeitszylinder | 34 | Rohrbride |
| 10 | Arbeitskolben | 35 | Zugseil |
| 11 | Schlauchklemmschraube | 36 | Zugbügel |
| 12 | Befestigungsbohrung | 37 | Stellschraube |
| 13 | O-Ring | 38 | Druckregulierungskanal |
| 14 | Kanal | 39 | Druckregulierkolben |
| 15 | Kammer | 40 | Sperrschieber |
| 16 | Einfüllnippel | 41 | Träger |
| 17 | Schließkugel | 42 | Ringnut |
| 18 | Kolbenbohrung | 43 | Druckfeder |
| 19 | Gewindezapfen | 44 | Regulierschraube |
| 20 | Stellrad | 45 | Schwenklager |
| 21 | Gewindebohrung | 46 | Gebergehäuse |
| 22 | Hydraulik-Schlauch | 47 | Kammer |
| 23 | Geberzylinder | 48 | Bohrung |
| 24 | Geberkolben | 49 | Flanschbereich |
| 25 | Entlüftungsschraube | | |

**Patentansprüche**

1. Hydraulische Bremse für Fahrräder mit einem am Lenkerrohr des Fahrrades befestigten Bremshebel, der auf einem in einem Geberzylinder verschiebbar angeordneten Geberkolben wirkt, wobei die durch den Geberkolben und -zylinder definierte Kammer mit Hydraulikflüssigkeit gefüllt ist, die über einen Hydraulikschlauch in die Kammer eines Arbeitszylinders geleitet wird, in dem ein Arbeitskolben verschiebbar angeordnet ist, der auf die Bremsbacken des Fahrrades einwirkt, **dadurch gekennzeichnet**, daß ein einziger Arbeitszylinder (9) oberhalb der Gabel (1) des Fahrrades befestigt ist, und daß der Arbeitskolben (10) mit einem Betätigungskopf (20,36) verbunden ist, der mit Zugseilen (7,35) verbunden ist, die auf die vorhandenen, herkömmlichen Bremsbacken (2) wirken.

2. Bremse nach Anspruch 1, **dadurch gekennzeichnet**, daß der Betätigungskopf als Stellrad (20) ausgebildet ist, welches mit einem Gewindezapfen (19) verstellbar in einer Kolbenbohrung (18) des Arbeitskolbens (10) gehalten ist.

3. Bremse nach Anspruch 1 oder 2, **dadurch gekennzeichnet**, daß das Zugseil (7) der rechten Bremsbacke (2) mit dem Zugseil (7) der linken Bremsbacke (2) verbunden ist, und über den Betätigungskopf (20,36) geführt ist.

4. Bremse nach Anspruch 1, **dadurch gekennzeichnet**, daß der Betätigungskopf als Zugbügel (36) ausgebildet ist, der eine obere Gewindebohrung (31) aufweist, in welche der Gewindebolzen einer Stellschraube (37) eingreift, die sich mit ihrem bolzenseitigen Ende auf dem Arbeitskolben (10) abstützt.

5. Bremse nach Anspruch 4, **dadurch gekennzeichnet**, daß am Zugbügel (36) jeweils das eine Ende eines Zugseils (35) befestigt ist, dessen jeweiliges anderes Ende mit dem freien, schwenkbaren Teil der Bremsbacke (2) verbunden ist.

**6.** Bremse nach einem der Ansprüche 1 - 5, **dadurch gekennzeichnet,** daß der Betätigungskopf (20,36) seitliche Flanschbereiche (49) aufweist, die den Arbeitszylinder (9) von oben her übergreifen und damit vor Verschmutzung schützen.

**7.** Bremse nach einem der Ansprüche 1 - 6, **dadurch gekennzeichnet**, daß eine Druckreguliervorrichtung zur Regulierung des Hydraulikdruckes vorhanden ist.

**8.** Bremse nach Anspruch 7, **dadurch gekennzeichnet**, daß die Druckreguliervorrichtung aus einem Träger (41) besteht, in dem eine Kammer (47) eingearbeitet ist, welche flüssigkeitsleitend mit der Kammer (15) des Arbeitszylinders (9) verbunden ist, und in welche die eine Seite eines Druckregulierkolbens (39) eingreift, der von seiner anderen Seite federbelastet gegen die Kammer (15) des Arbeitszylinders (9) gedrückt ist.

**9.** Bremse nach Anspruch 8, **dadurch gekennzeichnet**, daß die Federvorspannung der Feder des Druckregulierkolbens (39) einstellbar ist.

**10.** Bremse nach einem der Ansprüche 8 oder 9, **dadurch gekennzeichnet**, daß die Verschiebung des Druckregulierkolbens (39) arretierbar ist.

**11.** Bremse nach einem der Ansprüche 1 - 10, **dadurch gekennzeichnet**, daß die Schlauchklemmschraube (11) den Hydraulikschlauch (22) mit einem Konus gegenüber dem Träger (8) abdichtet.

FIG 1

7

FIG 2

| Europäisches Patentamt | EUROPÄISCHER RECHERCHENBERICHT | Nummer der Anmeldung EP 93 11 7021 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | BE-A-444 476 (BARRERE)<br>* Seite 3, Zeile 33 - Seite 5, Zeile 31; Abbildung 3 *<br>--- | 1 | B62L3/02<br>B62L1/14 |
| A | FR-A-2 575 991 (LELEU)<br>* Seite 3, Zeile 7 - Zeile 40; Abbildungen 3,4 *<br>----- | 1 | |

**RECHERCHIERTE SACHGEBIETE (Int.Cl.5)**

B62L

Der vorliegende Recherchenbericht wurde für alle Patentansprüche erstellt

| Recherchenort | Abschlußdatum der Recherche | Prüfer |
|---|---|---|
| DEN HAAG | 22. Februar 1994 | Harteveld, C |